# EUROPEAN PATENT SPECIFICATION

(11) **EP 2 830 872 B1**
(45) Date of publication and mention of the grant of the patent: **06.07.2016**
(21) Application number: 13713115.7
(22) Date of filing: 18.03.2013
(51) Int. Cl.: B32B 5/02, B32B 27/32, E04F 13/00, E04F 15/16

(54) **MULTILAYER SURFACE COVERING**
MEHRSCHICHTIGE OBERFLÄCHENABDECKUNG
REVÊTEMENT DE SURFACE MULTICOUCHE

(30) Priority: 28.03.2012 EP 12161780
(43) Date of publication of application: 04.02.2015
(73) Proprietor: Tarkett GDL, 9779 Lentzweiler (LU)
(72) Inventor: BASTIN, Pierre, L-9559 Wiltz (LU); DI CROCE, Pascal, L-9559 Wiltz (LU)
(74) Representative: Pronovem
(86) International application number: PCT/EP2013/055580
(87) International publication number: WO 2013/143903

(56) References cited:
- DE-C1- 19 955 713
- US-A1- 2001 028 127
- US-A1- 2010 143 684

## Description

### Field of the invention

The present invention relates to a multilayer PVC-free surface covering comprising a fibre veil on its back surface which is intended to contact the surface to cover. It relates also to a method for producing such a multilayer PVC-free surface covering and a method for covering a surface with such a multilayer PVC-free surface covering.

### Prior art and related technical background

Surface coverings are widely used to cover buildings or houses surfaces as they are more pleasant, more aesthetic and more comfortable than a surface just painted.

Among surface coverings, and particularly floor coverings, carpets and multilayer surface coverings are well known.

Carpets are textile, or fibers-based, floor coverings comprising an upper layer called "pile", which is the visible wear surface, made of natural or synthetic yarn or fibres, woven together or tufted on a support layer.

Multilayer surface coverings are non-fibres-based coverings. They are generally made of a plurality of polymer-based layers, sheets or films, laid one over the others.

PVC-based multilayer surface coverings are well known; However due to environmental issues regarding VOC (Volatile Organic Compounds) release, efforts on PVC alternatives were developed and PVC-free surface coverings were proposed, among which polyolefin-based surface coverings.

Generally, multilayer surface coverings comprise a "support layer" and an upper layer known as "wear layer", with optionally a decorative layer between the support layer and the wear layer and/or varnish layer as top coating.

Despite the fact that multilayer surface coverings may comprise a non-woven fiberglass mat embedded into the support layer, they may further comprise a woven or non-woven mat, having a thickness of several millimetres, on the back side of the support layer, i.e. on the surface intended to contact the surface to cover, to provide improved dimensional stability, strength, better insulating and acoustic properties.

Multilayer surface coverings are generally laid on the surface to cover by means of a glue which is adapted to the nature of the support layer of the surface covering.

For PVC-based coverings, the glue is generally an acrylic-based glue.

For PVC-free surface coverings, a PVC-based coverings compatible glue, in particular acrylic-based glue, is not suitable because of adhesion issues with the support layer of PVC-free surface coverings.

Regarding multilayer surface coverings comprising a woven or non-woven mat on the back side of support layer, they are generally not glued on the surface to cover to maintain the stability, strength, insulating and acoustic properties provided by the woven or non-woven mat.

### Aims of the invention

The present invention aims to provide a multilayer PVC-free a surface covering, and a method for covering a surface with such surface covering, which do not have the drawbacks of the prior.

The present invention aims to provide a PVC-free multilayer surface covering having an improved adherence with the surface to cover.

The invention aims to provide a multilayer PVC-free surface covering which may be applied to the surface to cover with a large number of glue types, particularly with PVC compatible glues, i.e. glues used to fasten PVC-free surface coverings.

### Summary of the invention

The present invention discloses a multilayer PVC-free surface covering comprising a PVC-free support layer comprising a fibre veil having a specific weight comprised between 17 to 75 g/m² on the side intended to contact, in use, the surface to cover, said fibre veil comprising a polyolefin-based binder impregnation at a weight comprised between 5 to 25 g/m².

According to particular embodiments, the multilayer PVC-free surface covering may comprise one, or a suitable combination of one or several, of the following characteristics:
- the weight ratio of the binder composition / weight of the fibre veil 3 is comprised between 0.13 and 0.625, preferably between 0.2 to 0.375,
- the polyolefin-based binder impregnation comprises high density polyethylene (HDPE), low density polyethylene (LDPE) or linear low density polyethylene (LLDPE), very Low Density Polyethylene (VLDPE), ethylene vinyl acetate (EVA), polyolefin plastomers (POP), polyolefin elastomers (POE) or a combination thereof,
- the fibre veil comprising the polyolefin-based binder impregnation has a thickness of less than 350 µm, preferably less than 250 µm,
- the PVC-free support layer is a polyolefin-based layer,
- the PVC-free support layer comprises a composition comprising ethylene vinyl acetate (EVA), ethyl methyl acrylate (EMA), ethylene butyl acrylate (EBA), very low density polyethylene (VLDPE), linear low density polyethylene (LLDPE), polyolefin plastomers (POP), polyolefin elastomers (POE) or a combination thereof,
- the multilayer PVC-free surface covering comprises a decorative layer comprising a polyurethane water-based ink, and a polyolefin-based wear layer,
- the multilayer PVC-free surface covering comprises a polyurethane-based varnish layer over a polyolefin-based wear layer.

The present invention relates to the use of a fibre veil having a specific weight comprised between 17 to 75 g/m², and comprising a polyolefin-based binder impregnation at a weight comprised between 5 to 25 g/m², to enhance the roughness of the back surface of a PVC-free support layer or a surface covering comprising said a support layer.

The present invention relates also to the use of a fibre veil having a specific weight comprised between 17 to 75 g/m², and comprising a polyolefin-based binder impregnation at a weight comprised between 5 to 25 g/m², to make a PVC-free support layer of a multiple layer PVC-free surface covering compatible with a PVC compatible glue, preferably an acrylic-based glue.

The present invention relates to a method for producing the surface multiple layer PVC-free surface covering according to the invention, said method comprising the steps of providing a fibre veil having a specific weight comprised between 17 to 75 g/m² and impregnated with a polymer-based binder composition at a weight comprised between 5 to 25 g/m² or providing a fibre veil having a specific weight comprised between 17 to 75 g/m² and spreading a polymer-based binder composition at a weight comprised between 5 to 25 g/m² over one side of said fibre veil, providing a PVC-free support layer or a multiple layer PVC-free surface covering comprising a PVC-free support layer, submitting to heat, or heat and pressure, the fibre veil comprising the polymer-based binder composition before being, or simultaneously while being, brought into contact to the support layer or the support layer of multiple layer PVC-free surface covering.

The method for producing the multiple layer PVC-free surface covering according to the invention may comprises the step of submitting to heat the fibre veil comprising the polymer-based binder composition simultaneously while being put in contact with the support layer and simultaneously while the wear layer is brought into contact to the support layer.

In a preferred embodiment of the method for producing the multiple layer PVC-free surface covering according to the invention, the heating temperature is comprised between 90 and 170°C and the pressure is comprised between 0.25 and 5 bars.

The present invention relates to a method for covering a surface, the method comprising the steps of providing a PVC compatible glue, providing a multiple layer PVC-free surface covering according to the invention, applying said PVC compatible glue at a concentration comprised between 150 and 500 g/m² over the surface to cover to form a glue layer having a thickness comprised between 100 and 400µm, applying said multiple layer PVC-free surface covering over said PVC compatible glue.

In a preferred embodiment of the method for covering a surface according to the invention the time between the step of applying the PVC compatible glue and applying the multiple layer PVC-free surface covering should not exceed 15 minutes.

### Brief description of the drawings

Figure 1 represents schematically a first embodiment of the surface covering according to the invention.
Figure 2 represents schematically a second embodiment of the surface covering according to the invention.
Figure 3 represents schematically a third embodiment of the surface covering according to the invention.

### Detailed description of the invention

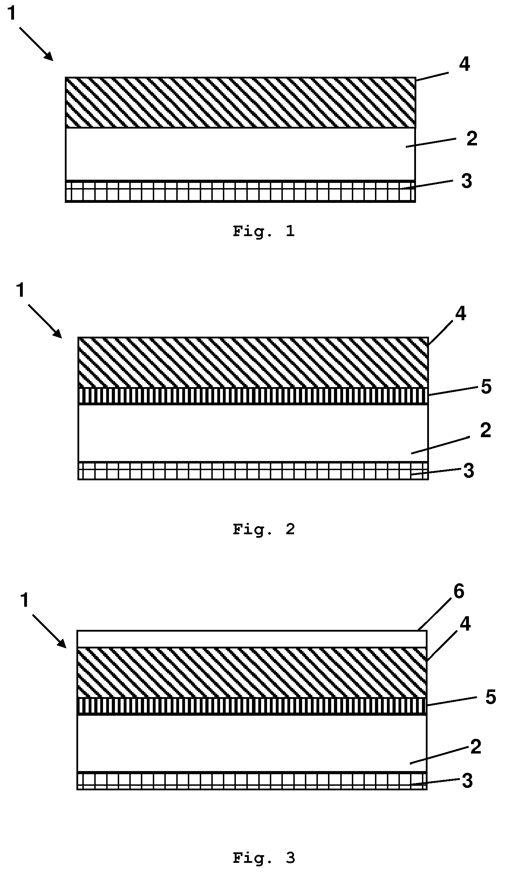

The multilayer PVC-free surface covering 1 comprises a support layer 2 (Fig. 1) being a PVC-free layer comprising a thermoplastic composition.

In a preferred embodiment, the thermoplastic composition comprises a polyolefin resin or a combination of polyolefin resins.

Preferably, the polyolefin resin is ethylene vinyl acetate (EVA), ethyl methyl acrylate (EMA), ethylene butyl acrylate (EBA), very low density polyethylene (VLDPE), linear low density polyethylene (LLDPE), polyolefin plastomers (POP), polyolefin elastomers (POE) or a combination thereof.

Concerning the definition of POE and POP we refer to the *"*Handbook of Plastics Elastomers and Composites, Charles A. Harper, 4th edition, Mc Graw-Hill Handbooks, p 195. Elastomer and plastomer resins are defined as being elastomer when the content of octene monomer is less than 20%, and as being plastomer when the content of octene monomer is more than 20%. However, the POE and POP according to the invention may also be the ones obtained by replacing octene monomers by butene or hexene co-monomers.

The polyolefin elastomer or plastomers are disclosed in US 5 272 236 and US 5 278 272.

Preferably, the polyolefin resin has a Melt Flow Index (MFI) comprised between 2 and 400g/10min (at 190°C under 2.16 kg weight).

Preferably, VLDPE has a density range of 0.880 to 0.915 g/cm³ (ASTM D792), LLDPE a density range of 0.915 to 0.925 g/cm³ (ASTM D792), POEs or POPs a density of 0.87 to 0.902 g/cm³ (ASTM D792).

In a preferred embodiment, the composition of the support layer 2 comprises a polyolefin elastomer having a density of around 0.88g/cm³ and a Melt Flow Index (MFI) of 2g/10min (at 190°C under 2.16 kg weight).

In another preferred embodiment, the composition of the support layer 2 is the one disclosed in PCT/EP2009/065993.

In another preferred embodiment, the composition of the support layer 2 comprises at least one second polymer. Said second polymer comprises acid anhydride groups and represents at least 5 parts in weight, or 5 %wt, preferably between 10 to 40 parts in weight, per 100 parts of the total amount of polymers.

The polymer comprising acid anhydride groups may be, for example, a polyethylene incorporating maleic anhydride monomers and having a density of around 0.94g/cm³ and a MFI (at 190°C under 2.16 kg weight) of around 25g/10 min, or a terpolymer of ethylene, butyl-acrylate and maleic anhydride, said terpolymer having a density of around 0.94g/cm³ and a MFI(at 190°C under 2.16 kg weight) of around 5g/10 min, or a polyolefin plastomer or elastomer, obtained by a metallocene catalysis and chemically modified to incorporate maleic anhydride, and having a density of around 0.88g/cm³ and a MFI (at 190°C under 2.16 kg weight) of around 3.7g/10 min, or an EVA polymer chemically modified to incorporate maleic anhydride, and having a density of around 0.96g/cm³ and a MFI (at 190°C under 2.16 kg weight) of around 1.4g/10 min.

In a preferred embodiment, the composition of the support layer 2 comprises 30%wt of VLDPE having a density of 0.9 g/cm³ and a MFI of 3g/10min, 30%wt of POE having a density of 0.87 g/cm³ and a MFI of 1g/10min, 30%wt of EVA having around 18% of vinyl acetate and a MFI of 2g/10min and 10%wt of POE comprising anhydride groups, having a density of 0.87 g/cm³ and a MFI of 3.7g/10min, the percentage in weight being based on the total amount of the polyolefin resins and the MFI being measured at 190°C under 2.16 kg weight.

Preferably, the composition of the support layer 2 further comprises at least 100 parts of at least one filler per 100 parts of the total amount of polymer or polymers.

The filler is preferably a mineral filler, for example CaCO₃, MgCO₃, CaMgCO₃, SiO₂, silicates, barium sulphates, alumina hydrates, magnesium hydrates or zinc borates.

The support layer 2 may also comprise additives such as thermal or light stabilizers, antistatic additives, processing additives, the type and the quantity of these additives being adapted to the process in particular to the type and quantity of component of the layer composition.

The surface covering 1 may further comprise a glass veil to provide dimensional stability to the support layer 2. The glass veil may be embedded in the support layer 2.

The support layer 2 has a thickness comprised between 500 and 3700 µm, more preferably around 1700 µm.

The multilayer PVC-free surface covering 1 comprises a fibre veil 3 on the surface of the support layer 2 intended to contact and give a better grip to the surface to be covered.

The fibre veil 3 may comprise single-component and/or bi-component fibres.

The fibres forming the fibre veil 3 may be natural, animal or vegetal fibres, synthetic fibres or a combination thereof. They may be made of jute, cotton, wool, or being cellulosic fibers. They may be made of polyester, polyamide, polyethylene or polypropylene. In a preferred embodiment, the fibers have a polyester-based core surrounded by a polyamide-based Sheath.

The fibre veil 3 comprises fibres having a diameter comprised between 15 and 50µm and a length higher than 1 cm.

Preferably, the fibre veil 3 has a specific weight comprised between 17 to 75 g/m², more preferably between 25 and 50 g/m².

Preferably, the fibre veil 3 has a thickness comprised between 50 to 300 µm.

The fibre veil 3 further comprise a binder composition, preferably a polymer-based binder, allowing bounding the fibres together and allowing also improving the adhesion with the support layer 2.

The binder composition comprises preferably high density polyethylene (HDPE), low density polyethylene (LDPE) or linear low density polyethylene (LLDPE), Very Low Density Polyethylene (VLDPE), ethylene vinyl acetate (EVA), polyolefin plastomers (POP), polyolefin elastomers (POE) or a combination thereof.

The fibre veil 3 is impregnated with the binder composition at a concentration comprised between 5 to 25 g/m², more preferably between 10 and 15 g/m².

Preferably, the weight ratio of the binder composition / weight of the fibre veil 3 is comprised between 0.13 and 0.625. Preferably, the weight ratio is comprised between 0.2 to 0.375, more preferably between 0.266 to 0.333.

Preferably, the binder composition is a powder. In this embodiment, the powder is preferably spread using any suitable device over at least one side of the fibre veil 3.

Preferably, the thickness of the fibre veil 3 comprising the binder composition as a powder, before being submitted to heat, or heat and pressure, is comprised between 80 µm to 350 µm.

The cohesion of the fibres of the fibre veil 3 is obtained by submitting the impregnated fibre veil 3 to heat, at a temperature above the melting point of the binder composition, or to heat and pressure, preferably between 90 and 170°C, preferably between 0.25 and 5 bars, preferably during 10 to 60 seconds, using any suitable device.

The heat allow the melted binder composition to penetrate through 35 to 70% of the fibre veil thickness.

The thickness of the fibre veil 3 comprising the melted binder composition depends on the specific weight of the fibres and the amount of binder composition; however, the impregnated fibre veil 3 has a thickness comprised between 80 and 350 µm.

The binder composition has the advantage of providing simultaneously adhesion between the fibres within the fibre veil 3 and adhesion of the fibre veil 3 to the support layer 2.

It further provides the advantage of being easily processed as it avoids the fibre veil 3 to stick to hot metal devices during the production of the multiple layer surface covering.

The use of a fibre veil 3 enhances the roughness of the back surface of a PVC-free support layer 2 or a surface covering comprising such a support layer 2.

The use of the fibre veil 3 makes a PVC-free support layer 2 of a multilayer PVC-free surface covering 1 compatible with a PVC compatible glue, i.e. a glue used to fasten a PVC-based surface covering to a surface to cover.

The use of the fibre veil 3 makes a PVC-free support layer 2 of a multilayer PVC-free surface covering 1 compatible with an acrylic-based glue.

The multilayer PVC-free surface covering 1 comprises a wear layer 4 laid over the support layer 2 or over a decorative layer 5 if any.

The wear layer 4 is made of any suitable composition which is compatible with the support layer 2 composition, and decorative layer 5 composition if any.

The wear layer 4 is either a monolayer or multilayer based on an acid polymer, preferably based on ethylene methacrylic acid or ethylene acrylic acid co-monomer or terpolymer.

Preferably, the wear layer 4 is a multiple layer of a non-neutralized acid polymer.

However, the wear layer 4 could also be a monolayer or multilayer based on an acid polymer neutralized or partially neutralised to form an ionomer.

The wear layer 4, being either a monolayer or a multilayer, has a thickness comprised between 100 and 800µm, preferably between 150 and 300 µm.

Depending on the wear properties the wear layer 4 should have, each layer, forming the wear layer 4 in the multilayer embodiment, could have a thickness comprised between 100 and 800µm.

The surface covering 1 may further comprise a decorative layer 5 between the support layer 2 and the wear layer 4 (Fig. 2). In this embodiment, the wear layer 4 is substantially transparent.

The decorative layer 5 is made of a single composition or made of several compositions. The decorative layer 5 composition, or compositions, comprise any suitable pigment or pigments combination. Preferably, the composition is an ink, preferably a polyolefin compatible ink or a composition comprising such inks. More preferably, it is a water-based ink. For example, the ink is polyurethane water-based ink.

The decorative layer 5 may comprise one or several layers, successive layers, of the above mentioned composition or compositions.

The surface covering 1 according to the invention may further comprise over the wear layer 4, a varnish layer 6 (Fig. 3).

Preferably, the composition of the varnish layer 6 comprises curable polyurethane which is cured by UV and/or by heat, to form a three-dimensional structure allowing to get the wear and stain resistance properties.

The varnish layer 6 has preferably a thickness comprised between 5 and 25 µm.

The surface covering according to the invention may be a wall or a floor covering.

The method to produce the multilayer PVC-free surface covering according to the invention comprise the step of providing a fibre veil 3 and spreading a polymer-based binder composition over one side of said fibre veil 3, or providing a fibre veil 3 impregnated with a polymer-based binder composition and providing a PVC-free support layer 2 or a multiple layer PVC-free surface covering 1 comprising a PVC-free support layer 2. The fibre veil 3 comprising the polymer-based binder composition is submitted to heat, or heat and pressure, before being or simultaneously while being brought into contact to the support layer 2 or the support layer 2 of multiple layer PVC-free surface covering 1.

Preferably, the bounding of the fibres to each other in the fibre veil 3 is preferably simultaneous to the adhesion of the fibre veil 3 to the support layer 2.

In the embodiment wherein a PVC-free support layer 2 is provided and not a multiple layer PVC-free surface covering 1, the method further comprise the steps of applying, over the opposite surface of the support layer 2 comprising the fibre veil 3, a wear layer 4, or a decorative layer 5 and a wear layer 4, and optionally a varnish layer 6 over the wear layer.

In a preferred embodiment, the fibre veil 3 comprising the polymer-based binder composition is submitted to heat simultaneously while being put in contact with the support layer 2 and simultaneously while the wear layer 4 is brought into contact to the support layer 2.

For all the embodiments, the heating temperature is above the melting point of the binder composition. Preferably, the heating temperature is comprised between 90 and 170°C.

For all the embodiments when heat and pressure are used, the pressure is comprised between 0.25 and 5 bars, more preferably between 1 and 3 bars.

The contact of the impregnated fibre veil 3 and the support layer 2 may be performed by any suitable means, preferably by hot calendering, belt calendering, hot cylinders pressing, through-air thermal bonding, radiant-heat bonding or a combination thereof.

The PVC-free support layer 2, fibre veil 3, polymer-based binder composition, decorative layer 5 and transparent wear layer 4 are those described for the multiple layer PVC-free surface covering 1 according to the invention.

The terms "applying" and "applied" should be understood as covering any suitable process step wherein a layer is formed onto, or put in contact to, another layer.

### Examples

In all the examples (comparative examples and examples according to the invention), the surface covering 1 comprises:
- a 1700 µm thick support layer 2 having a composition comprising 30%wt of VLDPE, 30%wt of POE, 30%wt of EVA, 10%wt of POE comprising anhydride groups (percentage in weight based on the total amount of the polyolefin resins), 20 phr of mineral oil, 300 phr of calcium carbonate, 2 phr of stearic acid, "Phr" meaning "Per Hundred Resin", a proportion by weight in respect to 100 parts of the polymers,
- a 200 µm thick transparent wear layer 4 made of two coextruded films, the first film being a 160 µm thick film made of an acid-based polymer neutralized or partially neutralised to form an ionomer, the second being a 40 µm thick EMAA-based film, the wear layer 4 being applied at around 180°C for around 120 seconds,

The comparative examples comprise either no fibre veil 3, or a fibre veil 3 with no binder composition, and a fibre veil 3 comprising a polyolefin-based binder composition.

The examples according to the invention comprise a fibre veil 3 having different specific weight and comprising different concentration of binder composition.

For all the examples (comparative examples and examples according to the invention), the PVC compatible glue is a water based acrylic-based glue (Sadertac V6 from Bostik).

The adherence between the surface covering 1 and the surface to cover (the floor), are measured in a peeling test performed at 23°C with a delamination angle of 90°. The glue is laid over concret at a thickness of around 0.3 mm at a concentration of 300 g/m² and is then allowed to dry at room temperature during 5 minutes. The PVC-free surface covering is then laid over the glue and is pressed using a "pressure roll" of around 30 kg and 50 cm width. The adherence of the PVC-free surface covering and the concret is measured after 10 days at 23°C.

**Table 1: Comparative examples**

| | Fibre Veil | Binder composition | Thickness (µm) | Adherence (N/mm) |
|---|---|---|---|---|
| C1 | no | / | / | 0.1 |
| C2 | Polyester fibres 25g/m² | no | 80 | 0.1 |
| C3 | Polyester fibres and Polyethylene fibres 25g/m² | no | 100 | 0.1 |
| C4 | Polyester/co-polyamide fibres 30g/m² | no | 200 | 0.1 |

In table 1, the fibre veil comprising polyester fibres (C2) is Lutradur LD 7225 from Freudenberg, the fibre veil comprising polyester fibres and polyethylene fibres (C3) is LFB 20317 from Freudenberg and the fibre veil comprising polyester and co-polyester (C4) fibres is Colback WA 30 from Colbond.

In the comparative examples, the fibre veil 3 comprising the polymer-based binder composition is laminated with the support layer 2 at 1 bar, 145°C, during 30 seconds.

**Table 2: Examples according to the invention**

| | Fibre Veil | Binder composition | Thickness (µm) | Ratio Binder/ fibres | Adherence (N/mm) |
|---|---|---|---|---|---|
| 1 | Polyester 40g/m² | HDPE 15g/m² | 200-300 | 0.375 | 1.2 |
| 2 | Polyester 17g/m² | HDPE 9g/m² | 170-230 | 0.53 | 0.8 |

In table 2 the fibre veil comprising polyester fibers is Termoline 40286 and Termoline 17280 from Ipetex. The HDPE is N2805 from ICO polymers.

For these examples, the fibre veil 3 comprising the polymer-based binder composition is laminated with the support layer 2 at 1 bar, 145°C, during 30 seconds.

Taking into account that, an adherence under 0.3 N/mm is considered as being poor, an adherence between 0.3 and 0.6 N/mm is considered as being acceptable and an adherence of 1 N/mm or above 1 N/mm is considered as being ideal, from tables 1 and 2, it appears that a fibre veil comprising a binder composition has an enhanced adhesion in comparison to a fibre veil without such a binder composition. The adherence increases with the specific weight of the fibre veil and with the increase of the ratio weight of the binder composition/weight of the fibre veil.

The difference of thickness observed for the examples according to the invention is due to the difference of concentration and distribution within the fibre veil of the binder composition.

The influence of the nature of the binder composition, the nature of the fibre veil were studied and the results are given in tables 3 and 4. In these examples, the fibre veil 3 comprising the polymer-based binder composition is submitted to heat (145°C) and pressure (1bar) simultaneously while being brought into contact to the support layer 2. The influence of the pressure, at a fixed temperature of 145°C, was also studied and the results are given in table 5.

**Table 3: Examples according to the invention**

| | Fibre Veil | Binder composition | MFI | Ratio Binder/ fibres | Adherence (N/mm) |
|---|---|---|---|---|---|
| 3 | Polyester/co-polyamide fibres 30g/m² | HDPE 10g/m² | 20 | 0.33 | 1.1 |
| 4 | Polyester/co-polyamide fibres 30g/m² | LLDPE 20g/m² | 20 | 0.33 | 1.1 |
| 5 | Polyester/co-polyamide fibres 30g/m² | LDPE 10g/m² | 21 | 0.33 | 1 |
| 6 | Polyester/co-polyamide fibres 30g/m² | POP (d=0.902) 10g/m² | 30 | 0.33 | 1.2 |
| 7 | Polyester/co-polyamide fibres 30g/m² | EVA 10g/m² | 20 | 0.33 | 1.3 |
| 8 | Polyester/co-polyamide fibres 30g/m² | LDPE 10g/m² | 7.5 | 0.33 | 0.9 |
| 9 | Polyester/co-polyamide fibres 30g/m² | LDPE 10g/m² | 6.5 | 0.33 | 0.9 |
| 10 | Polyester/co-polyamide fibres 30g/m² | LDPE 10g/m² | 2 | 0.33 | 0.7 |
| 11 | Polyester/co-polyamide fibres 30g/m² | EVA 4g/m² | 20 | 0.13 | 0.5 |
| 12 | Polyester/co-polyamide fibres 30g/m² | EVA 6g/m² | 20 | 0.2 | 0.6 |
| 13 | Polyester/co-polyamide fibres 30g/m² | EVA 8g/m² | 20 | 0.26 | 0.8 |
| 14 | Polyester/co-polyamide fibres 30g/m² | EVA 10g/m² | 20 | 0.33 | 1 |
| 15 | Polyester/co-polyamide fibres 30g/m² | EVA 15g/m² | 20 | 0.5 | 1.2 |

In table 3 the fibre veil is Colback WA 30 from Colbond. The HDPE is N2805, the LLDPE is N2301, the LDPE having a MFI of 21g/10min, 7.5g/10min, 6.5g/10min and 2g/10min is respectively N2105, N2102, N2103 and N2100, the POP is N2004 and EVA is N1009, all compounds being from ICO polymers.

For these examples, the fibre veil 3 comprising the polymer-based binder composition is laminated with the support layer 2 at 1 bar, 145°C, during 30 seconds.

**Table 4: Examples according to the invention**

| | Fibre Veil | Binder composition | MFI | Ratio Binder/ fibres | Adherence (N/mm) |
|---|---|---|---|---|---|
| 16 | Polyester fibres 25g/m² | LDPE 10g/m² | 2 | 0.4 | 0.7 |
| 17 | Polyester fibres 25g/m² | LDPE 12.5g/m² | 2 | 0.5 | 0.9 |
| 18 | Polyester fibres 25g/m² | LDPE 15g/m² | 2 | 0.625 | 0.9 |

In table 4, the fibre veil is Lutradur LD7225 from Freudenberg. The LDPE is N2100 from ICO polymers.

For these examples, the fibre veil 3 comprising the polymer-based binder composition is laminated with the support layer 2 at 1 bar, 145°C, during 30 seconds.

**Table 5: Examples according to the invention**

| | Fibre Veil | Binder composition | MFI | Pressure (bars) | Adherence (N/mm) |
|---|---|---|---|---|---|
| 19 | Polyester/co-polyamide fibres 30g/m² | EVA 8g/m² | 20 | 0.25 | 0.7 |
| 20 | Polyester/co-polyamide fibres 30g/m² | EVA 8g/m² | 25 | 0.25 | 0.7 |
| 21 | Polyester/co-polyamide fibres 30g/m² | EVA 8g/m² | 45 | 0.25 | 0.9 |
| 22 | Polyester/co-polyamide fibres 30g/m² | EVA 8g/m² | 150 | 0.25 | 0.8 |
| 23 | Polyester/co-polyamide fibres 30g/m² | EVA 8g/m² | 400 | 0.25 | 0.7 |
| 24 | Polyester/co-polyamide fibres 30g/m² | EVA 8g/m² | 20 | 0.5 | 0.85 |
| 13 | Polyester/co-polyamide fibres 30g/m² | EVA 8g/m² | 20 | 1 | 0.8 |
| 25 | Polyester/co-polyamide fibres 30g/m² | EVA 8g/m² | 20 | 2 | 1.1 |
| 26 | Polyester/co-polyamide fibres 30g/m² | EVA 8g/m² | 20 | 3 | 1.1 |
| 27 | Polyester/co-polyamide fibres 30g/m² | EVA 8g/m² | 20 | 5 | 1.2 |

In table 3, the fibre veil is Colback WA 30 from Colbond. The EVA having a MFI of 20g/10min, 25g/10min, 45g/10min, 150g/10min, 400g/10min is repectively N1009, N1012, N1014, N1016, N1013 from ICO polymers.

For these examples, the fibre veil 3 comprising the polymer-based binder composition is laminated with the support layer 2 at 145°C during 30 seconds under the pressure given in the table.

**Table 6: Examples according to the invention**

| | Fibre Veil | Binder composition | MFI | Pressure (bars) | Adherence (N/mm) |
|---|---|---|---|---|---|
| 14 | Polyester/co-polyamide fibres 30g/m² | EVA 10g/m² | 20 | 1 | 1 |
| 28 | Polyester/co-polyamide fibres 50g/m² | EVA 10g/m² | 20 | 1 | 0.9 |
| 29 | Polyester/co-polyamide fibres 75g/m² | EVA 10g/m² | 20 | 1 | 0.8 |
| 30 | Polyester/co-polyamide fibres 50g/m² | EVA 15g/m² | 20 | 1 | 1.1 |
| 31 | Polyester/co-polyamide fibres 75g/m² | EVA 15g/m² | 20 | 1 | 1 |
| 32 | Polyester/co-polyamide fibres 75g/m² | EVA 20g/m² | 20 | 1 | 1.1 |
| 33 | Polyester/co-polyamide fibres 75g/m² | EVA 25g/m² | 20 | 1 | 1.1 |
| 34 | Polyester/co-polyamide fibres 75g/m² | EVA 25g/m² | 20 | 0.5 | 1 |

In table 6, the fibre veil 3 of 30g/m², 50g/m² and 75 g/m² are respectively Colback WA 30, Colback WA 50, Colback WA 75 from Colbond.

It appears that the fibre veil 3 having a specific weight comprised between 17 to 75 g/m2 and comprising a binder composition at a concentration comprised between 5 to 25 g/m² enhance the adhesion between a PVC-free surface covering and the surface to cover when a PVC compatible glue is used.

A ratio weight of the binder composition/weight of the fibre veil 3 comprised between 0.13 and 0.625 allows getting an adherence considered as being acceptable to ideal. Preferably, the ratio is comprised between 0.2 and 0.5, more preferably between 0.26 and 0.4.

The MFI of the binder composition is comprised between 2 and 400 g/10min (measured at 190°C under 2.16 kg), preferably between 6.5 and 150 g/10min (measured at 190°C under 2.16 kg) and more preferably between 7.5 and 40 g/10min (measured at 190°C under 2.16 kg).

The method for covering a surface comprises the steps of providing a multiple PVC-free substrate covering 1 according to the invention, providing a PVC compatible glue, laying said PVC compatible glue at a concentration comprised between 150 and 500 g/m², preferably 300 g/m², over the surface to cover before laying said PVC-free substrate covering over said PVC compatible glue.

Preferably, the multiple PVC-free substrate covering should be laid on the glue just after said glue has been applied on the surface to cover. However, generally in practice, the glue is applied over a wide surface before the surface covering is applied; in this case, the glue should not dry more than 15 minutes.

The PVC compatible glue may be neoprene-based or an acrylic-based glue.

The surface to cover may be an interior surface of a house or a building. The surface to cover may be a floor or a wall.

## Claims

1. A multilayer PVC-free surface covering (1) comprising a PVC-free support layer (2) comprising a fibre veil (3) having a specific weight comprised between 17 to 75 g/m² on the side intended to contact, in use, the surface to cover, said fibre veil (3) comprising a polyolefin-based binder impregnation at a weight comprised between 5 to 25 g/m².

2. The multilayer PVC-free surface covering (1) according to claim 1, wherein the weight ratio of the binder composition / weight of the fibre veil 3 is comprised between 0.13 and 0.625, preferably between 0.2 to 0.375.

3. The multilayer PVC-free surface covering (1) according to any of the claims 1 or 2, wherein the polyolefin-based binder impregnation comprises high density polyethylene (HDPE), low density polyethylene (LDPE) or linear low density polyethylene (LLDPE), very Low Density Polyethylene (VLDPE), ethylene vinyl acetate (EVA), polyolefin plastomers (POP), polyolefin elastomers (POE) or a combination thereof.

4. The multilayer PVC-free surface covering (1) according to any of the preceding claims, wherein the fibre veil (3) comprising the polyolefin-based binder impregnation has a thickness of less than 350 µm, preferably less than 250 µm.

5. The multilayer PVC-free surface covering (1) according to any of the preceding claims, wherein the PVC-free support layer (2) is a polyolefin-based layer.

6. The multilayer PVC-free surface covering (1) according to claim 5, wherein the PVC-free support layer (2) comprises a composition comprising ethylene vinyl acetate (EVA), ethyl methyl acrylate (EMA), ethylene butyl acrylate (EBA), very low density polyethylene (VLDPE), linear low density polyethylene (LLDPE), polyolefin plastomers (POP), polyolefin elastomers (POE) or a combination thereof.

7. The multilayer PVC-free surface covering (1) according to any of the preceding claims, further comprising a decorative layer (5) comprising a polyurethane water-based ink, and a polyolefin-based wear layer (4).

8. The multilayer PVC-free surface covering (1) according to any of the preceding claims, further comprising a polyurethane-based varnish layer (6) over a polyolefin-based wear layer (4).

9. Use of a fibre veil (3) having a specific weight comprised between 17 to 75 g/m², and comprising a polyolefin-based binder impregnation at a weight comprised between 5 to 25 g/m², to enhance the roughness of the back surface of a PVC-free support layer (2) or a surface covering comprising said a support layer (2).

10. Use of a fibre veil (3) having a specific weight comprised between 17 to 75 g/m², and comprising a polyolefin-based binder impregnation at a weight comprised between 5 to 25 g/m², to make a PVC-free support layer (2) of a multiple layer PVC-free surface covering (1) compatible with a PVC compatible glue, preferably an acrylic-based glue.

11. A method for producing a surface multiple layer PVC-free surface covering (1) comprising the steps of:
- providing a fibre veil (3) having a specific weight comprised between 17 to 75 g/m² and impregnated with a polymer-based binder composition at a weight comprised between 5 to 25 g/m² or providing a fibre veil (3) having a specific weight comprised between 17 to 75 g/m² and spreading a polymer-based binder composition at a weight comprised between 5 to 25 g/m² over one side of said fibre veil (3),
- providing a PVC-free support layer (2) or a multiple layer PVC-free surface covering (1) comprising a PVC-free support layer (2),
- submitting to heat, or heat and pressure, the fibre veil (3) comprising the polymer-based binder composition before being, or simultaneously while being, brought into contact to the support layer (2) or the support layer (2) of multiple layer PVC-free surface covering (1).

12. The method according to claim 11, wherein the fibre veil (3) comprising the polymer-based binder composition is submitted to heat simultaneously while being put in contact with the support layer (2) and simultaneously while the wear layer (4) is brought into contact to the support layer (2).

13. The method according to claims 11 or 12, wherein the heating temperature is comprised between 90 and 170°C and the pressure is comprised between 0.25 and 5 bars.

14. A method for covering a surface comprising the steps of:
- providing a PVC compatible glue,
- providing a multiple layer PVC-free surface covering (1) according to any of the claims 1 to 8,
- applying said PVC compatible glue at a concentration comprised between 150 and 500 g/m² over the surface to cover to form a glue layer having a thickness comprised between 100 and 400µm,
- applying said multiple layer PVC-free surface covering (1) over said PVC compatible glue.

15. The method according to claim 14, wherein the time between the step of applying the PVC compatible glue and applying the multiple layer PVC-free surface covering (1) should not exceed 15 minutes.

## Patentansprüche

1. Mehrschichtiger PVC-freier Oberflächenbelag (1), umfassend eine PVC-freie Trägerschicht (2), umfassend ein Faservlies (3) mit einem spezifischen Gewicht in dem Bereich zwischen 17 und 75 g/m² an der Seite, die in Verwendung für den Kontakt mit der zu belegenden Oberfläche vorgesehen ist, wobei das Faservlies (3) eine Bindemittelimprägnierung auf Polyolefinbasis mit einem Gewicht in dem Bereich zwischen 5 und 25 g/m² aufweist.

2. Mehrschichtiger PVC-freier Oberflächenbelag (1) gemäß Anspruch 1, wobei das Gewichtsverhältnis von Bindemittelzusammensetzung/Gewicht des Faservlieses (3) in dem Bereich zwischen 0,13 und 0,625, vorzugsweise zwischen 0,2 und 0,375, liegt.

3. Mehrschichtiger PVC-freier Oberflächenbelag (1) gemäß einem der Ansprüche 1 oder 2, wobei die Bindemittelimprägnierung auf Polyolefinbasis Polyethylen mit hoher Dichte (HDPE), Polyethylen mit niedriger Dichte (LDPE) oder lineares Polyethylen mit niedriger Dichte (LLDPE), Polyethylen mit sehr niedriger Dichte (VLDPE), Ethylenvinylacetat (EVA), Polyolefinplastomere (POP), Polyolefinelastomere (POE) oder eine Kombination davon umfasst.

4. Mehrschichtiger PVC-freier Oberflächenbelag (1) gemäß einem der vorstehenden Ansprüche, wobei das Faservlies (3), das die Bindemittelimprägnierung auf Polyolefinbasis umfasst, eine Dicke von weniger als 350 µm, vorzugsweise weniger als 250 µm, aufweist.

5. Mehrschichtiger PVC-freier Oberflächenbelag (1) gemäß einem der vorstehenden Ansprüche, wobei die PVC-freie Trägerschicht (2) eine Schicht auf Polyolefinbasis ist.

6. Mehrschichtiger PVC-freier Oberflächenbelag (1) gemäß Anspruch 5, wobei die PVC-freie Trägerschicht (2) eine Zusammensetzung umfassend Ethylenvinylacetat (EVA), Ethylmethylacrylat (EMA), Ethylenbutylacrylat (EBA), Polyethylen mit sehr niedriger Dichte (VLDPE), lineares Polyethylen mit niedriger Dichte (LLDPE), Polyolefinplastomere (POP), Polyolefinelastomere (POE) oder eine Kombination davon umfasst.

7. Mehrschichtiger PVC-freier Oberflächenbelag (1) gemäß einem der vorstehenden Ansprüche, ferner umfassend eine Dekorationsschicht (5) umfassend eine Tinte auf Polyurethan-Wasser-Basis und eine Verschleißschicht auf Polyolefinbasis (4).

8. Mehrschichtiger PVC-freier Oberflächenbelag (1) gemäß einem der vorstehenden Ansprüche, ferner umfassend eine Lackschicht auf Polyurethanbasis (6) über einer Verschleißschicht auf Polyolefinbasis (4).

9. Verwendung eines Faservlieses (3) mit einem spezifischen Gewicht in dem Bereich zwischen 17 und 75 g/m² und umfassend eine Bindemittelimprägnierung auf Polyolefinbasis mit einem Gewicht in dem Bereich zwischen 5 und 25 g/m² zum Erhöhen der Rauigkeit der Rückseite einer PVC-freien Trägerschicht (2) oder eines Oberflächenbelags, der die Trägerschicht (2) umfasst.

10. Verwendung eines Faservlieses (3) mit einem spezifischen Gewicht in dem Bereich zwischen 17 und 75 g/m² und umfassend eine Bindemittelimprägnierung auf Polyolefinbasis mit einem Gewicht in dem Bereich zwischen 5 und 25 g/m² zum Herstellen einer PVC-freien Trägerschicht (2) eines mehrschichtigen PVC-freien Oberflächenbelags (1), der mit einem PVC-kompatiblen Klebstoff, vorzugsweise einem Klebstoff auf Acrylbasis, kompatibel ist.

11. Verfahren zum Herstellen eines mehrschichtigen PVC-freien Oberflächenbelags (1) einer Oberfläche, umfassend die Schritte:
- Bereitstellen eines Faservlieses (3) mit einem spezifischen Gewicht in dem Bereich zwischen 17 und 75 g/m², imprägniert mit einer Bindemittelzusammensetzung auf Polymerbasis mit einem Gewicht in dem Bereich zwischen 5 und 25 g/m², oder Bereitstellen eines Faservlieses (3) mit einem spezifischen Gewicht in dem Bereich zwischen 17 und 75 g/m² und Verteilen einer Bindemittelzusammensetzung auf Polymerbasis mit einem Gewicht in dem Bereich zwischen 5 und 25 g/m² über eine Seite des Faservlieses (3),
- Bereitstellen einer PVC-freien Trägerschicht (2) oder eines mehrschichtigen PVC-freien Oberflächenbelags (1), der eine PVC-freie Trägerschicht (2) umfasst,
- Unterwerfen des Faservlieses (3), das die Bindemittelzusammensetzung auf Polymerbasis umfasst, an Hitze oder Hitze und Druck vor oder gleichzeitig mit seinem Inkontaktbringen mit der Trägerschicht (2) oder der Trägerschicht (2) des mehrschichtigen PVC-freien Oberflächenbelags (1).

12. Verfahren gemäß Anspruch 11, wobei das Faservlies (3), das die Bindemittelzusammensetzung auf Polymerbasis umfasst, an Hitze unterworfen wird, gleichzeitig damit, dass es in Kontakt mit der Trägerschicht (2) gebracht wird, und gleichzeitig damit, dass die Verschleißschicht (4) in Kontakt mit der Trägerschicht (2) gebracht wird.

13. Verfahren gemäß Ansprüchen 11 oder 12, wobei die Heiztemperatur in dem Bereich zwischen 90 und 170 °C liegt und der Druck in dem Bereich zwischen 0,25 und 5 bar liegt.

14. Verfahren zum Belegen einer Oberfläche, umfassend die Schritte:
- Bereitstellen eines PVC-kompatiblen Klebstoffs,
- Bereitstellen eines mehrschichtigen PVC-freien Oberflächenbelags (1) gemäß einem der Ansprüche 1 bis 8,
- Aufbringen des PVC-kompatiblen Klebstoffs mit einer Konzentration in dem Bereich zwischen 150 und 500 g/m² auf die zu belegende Oberfläche, um eine Klebstoffschicht mit einer Dicke in dem Bereich zwischen 100 und 400 µm zu bilden,
- Aufbringen des mehrschichtigen PVC-freien Oberflächenbelags (1) auf den PVC-kompatiblen Klebstoff.

15. Verfahren gemäß Anspruch 14, wobei die Zeit zwischen dem Schritt des Aufbringens des PVC-kompatiblen Klebstoffs und dem Aufbringen des mehrschichtigen PVC-freien Oberflächenbelags (1) 15 Minuten nicht überschreiten sollte.

## Revendications

1. Revêtement de surface multicouche sans PVC (1) comprenant une couche de support sans PVC (2) comprenant un voile de fibres (3) ayant un poids spécifique de 17 à 75 g/m² sur le côté destiné à entrer en contact, en cours d'utilisation, avec la surface à recouvrir, ledit voile de fibres (3) comprenant une imprégnation par un liant à base de polyoléfine à un poids de 5 à 25 g/m².

2. Revêtement de surface multicouche sans PVC (1) selon la revendication 1, dans lequel le rapport pondéral de la composition de liant contre le poids du voile de fibres (3) est de 0,13 à 0,625, préférablement de 0,2 à 0,375.

3. Revêtement de surface multicouche sans PVC (1) selon l'une quelconque des revendications 1 ou 2, dans lequel l'imprégnation par un liant à base de polyoléfine comprend un polyéthylène de haute densité (HDPE), un polyéthylène de basse densité (LDPE) ou un polyéthylène de basse densité linéaire (LLDPE), un polyéthylène de très basse densité (VLDPE), un éthylène acétate de vinyle (EVA), des plastomères polyoléfiniques (POP), des élastomères polyoléfiniques (POE), ou une combinaison de ceux-ci.

4. Revêtement de surface multicouche sans PVC (1) selon l'une quelconque des revendications précédentes, dans lequel le voile de fibres (3) comprenant l'imprégnation par un liant à base de polyoléfine a une épaisseur inférieure à 350 µm, préférablement inférieure à 250 µm.

5. Revêtement de surface multicouche sans PVC (1) selon l'une quelconque des revendications précédentes, dans lequel la couche de support sans PVC (2) est une couche à base de polyoléfine.

6. Revêtement de surface multicouche sans PVC (1) selon la revendication 5, dans lequel la couche de support sans PVC (2) comprend une composition comprenant de l'éthylène acétate de vinyle (EVA), du méthylacrylate d'éthyle (EMA), de l'éthylène acrylate de butyle (EBA), un polyéthylène de très basse densité (VLDPE), un polyéthylène de basse densité linéaire (LLDPE), des plastomères polyoléfiniques (POP), des élastomères polyoléfiniques (POE), ou une combinaison de ceux-ci.

7. Revêtement de surface multicouche sans PVC (1) selon l'une quelconque des revendications précédentes, comprenant en outre une couche décorative (5) comprenant une encre polyuréthane à base d'eau, et une couche d'usure à base de polyoléfine (4).

8. Revêtement de surface multicouche sans PVC (1) selon l'une quelconque des revendications précédentes, comprenant en outre une couche de vernis à base de polyuréthane (6) par-dessus une couche d'usure à base de polyoléfine (4).

9. Utilisation d'un voile de fibres (3) ayant un poids spécifique de 17 à 75 g/m², et comprenant une imprégnation par un liant à base de polyoléfine à un poids de 5 à 25 g/m², pour augmenter la rugosité de la surface postérieure d'une couche de support sans PVC (2) ou d'un revêtement de surface comprenant ladite une couche de support (2).

10. Utilisation d'un voile de fibres (3) ayant un poids spécifique de 17 à 75 g/m², et comprenant une imprégnation par un liant à base de polyoléfine à un poids de 5 à 25 g/m², pour fabriquer une couche de support sans PVC (2) d'un revêtement de surface multicouche sans PVC (1) compatible avec une colle compatible avec le PVC, préférablement une colle à base acrylique.

11. Procédé de fabrication d'un revêtement de surface multicouche sans PVC (1) d'une surface comprenant les étapes qui consistent à :
- fournir un voile de fibres (3) ayant un poids spécifique de 17 à 75 g/m² et imprégné avec une composition de liant à base de polymère à un poids de 5 à 25 g/m² ou fournir un voile de fibres (3) ayant un poids spécifique de 17 à 75 g/m² et étaler une composition de liant à base de polymère à un poids de 5 à 25 g/m² par-dessus un seul côté dudit voile de fibres (3),
- fournir une couche de support sans PVC (2) ou un revêtement de surface multicouche sans PVC (1) comprenant une couche de support sans PVC (2),
- exposer à la chaleur, ou à la chaleur et à la pression, le voile de fibres (3) comprenant la composition de liant à base de polymère avant de le mettre en contact, ou en le mettant simultanément en contact, avec la couche de support (2) ou la couche de support (2) du revêtement de surface multicouche sans PVC (1).

12. Procédé selon la revendication 11, dans lequel le voile de fibres (3) comprenant la composition de liant à base de polymère est exposé à la chaleur en le mettant simultanément en contact avec la couche de support (2) tandis que la couche d'usure (4) est simultanément mise en contact avec la couche de support (2).

13. Procédé selon les revendications 11 ou 12, dans lequel la température de chauffage est de 90 à 170 °C et la pression est de 0,25 à 5 bars.

14. Procédé de revêtement d'une surface, comprenant les étapes qui consistent à :
- fournir une colle compatible avec le PVC,
- fournir un revêtement de surface multicouche sans PVC (1) selon l'une quelconque des revendications 1 à 8,
- appliquer ladite colle compatible avec le PVC à une concentration de 150 à 500 g/m² par-dessus la surface à recouvrir pour former une couche de colle ayant une épaisseur de 100 à 400 µm,
- appliquer ledit revêtement de surface multicouche sans PVC (1) par-dessus ladite colle compatible avec le PVC.

15. Procédé selon la revendication 14, dans lequel le temps qui s'écoule entre l'étape d'application de la colle compatible avec le PVC et l'application du revêtement de surface multicouche sans PVC (1) ne devrait pas dépasser 15 minutes.
